# FASCICULE DE BREVET EUROPEEN

(11) **EP 4 033 794 B1**
(45) Date de publication et mention de la délivrance du brevet: **13.08.2025**
(21) Numéro de dépôt: 22153112.2
(22) Date de dépôt: 25.01.2022
(51) Int. Cl.: H04W 8/20, H04W 12/72, H04W 8/26, H04W 60/04, H04L 9/40, H04L 67/306, H04W 12/04, H04W 12/06, H04W 12/30

(54) **PROCÉDÉ D'ATTRIBUTION DYNAMIQUE D'IDENTIFIANTS À UNE CARTE DE CIRCUIT INTÉGRÉ UNIVERSELLE EMBARQUÉE - EUICC D'UN ÉQUIPEMENT UTILISATEUR ET SYSTÈME ASSOCIÉ**
VERFAHREN ZUR DYNAMISCHEN ZUWEISUNG VON KENNUNGEN AN EINE EINGEBETTETE UNIVERSELLE INTEGRIERTE SCHALTKREISKARTE (EUICC) EINES BENUTZERGERÄTS UND ENTSPRECHENDES SYSTEM
METHOD FOR DYNAMIC ALLOCATION OF IDENTIFIERS TO AN EMBEDDED UNIVERSAL INTEGRATED CIRCUIT CARD (EUICC) OF A USER DEVICE AND ASSOCIATED SYSTEM

(30) Priorité: 25.01.2021 FR 2100665
(43) Date de publication de la demande: 27.07.2022
(73) Titulaire: THALES, 92400 Courbevoie (FR); Thales DIS France SA, 92190 Meudon (FR)
(72) Inventeur: MONTENOT, Jean-Marc, 92622 GENNEVILLIERS CEDEX (FR); ANSLOT, Michel, 13881 GEMENOS CEDEX (FR); SALIBA, Eric, 92622 GENNEVILLIERS CEDEX (FR); SCHOLLER, Franck, 92622 GENNEVILLIERS CEDEX (FR)
(74) Mandataire: Lavoix

(56) Documents cités:
- US-A1- 2018 242 141
- US-A1- 2020 169 868

## Description

La présente invention concerne un procédé d'attribution dynamique d'au moins un identifiant à un équipement utilisateur comportant une carte de circuit intégré universelle embarquée, dénommée dans ce qui suit eUICC (pour «Embedded Universal Integrated Circuit Card » en anglais), et qui est également parfois dénommée module d'identification d'abonné embarqué ou eSIM (« Embedded Subscriber Identification Module ») dans la littérature.

Lors d'une communication via un réseau de téléphonie mobile, un équipement utilisateur utilise différents identifiants, dont certains lui sont propres (et donc identiques d'une communication à l'autre) et d'autres lui sont attribués par le réseau (et même s'ils changent d'une communication à l'autre sont connus du réseau).

Ces identifiants permettent par conséquent de tracer les communications de cet équipement utilisateur sur le réseau. Les communications peuvent être écoutées et l'utilisateur de l'équipement et le destinataire des communications (qu'il s'agisse d'un service ou d'un autre utilisateur) peuvent être identifiés.

Il y a donc un besoin de rendre les communications intraçables entre un équipement utilisateur et un destinataire pour sécuriser les échanges.

Selon la norme GSMA, un terminal qui ne dispose que d'une interface radio, doit d'abord obtenir un profil temporaire (par exemple fourni par l'opérateur et saisi par l'utilisateur du terminal) pour établir une connexion initiale à un réseau de téléphonie mobile. Cette connexion initiale permet ensuite au terminal d'accéder à un SM-DP+ pour télécharger un profil définitif en utilisant un code d'activation, que le terminal doit également obtenir. Le document US 2020/169868 A1 divulgue la possibilité que le terminal obtienne simultanément des informations spécifiques de MNO et un code d'activation, les informations de MNO permettant d'établir la connexion initiale et le code d'activation permettant d'accéder à un SM-DP+. La manière d'obtenir ces informations reste conforme à la section 3.1 de SGP 22 de la norme GSMA.

Le but de la présente invention est de répondre à ce besoin.

Pour cela l'invention a pour objet un procédé d'attribution dynamique d'identifiants, le procédé consistant à attribuer au moins un identifiant d'abonnement, par exemple un IMSI, à une carte de circuit intégré universelle embarquée - eUICC résidant dans un équipement utilisateur - UE, le procédé consistant à transmettre par un équipement de gestion d'identifiants, au travers d'un premier réseau de téléphonie mobile dont une interface radio est utilisée par l'UE pour se connecter, un identifiant d'abonnement dans un champ d'un message échangé conformément à un protocole standard d'attachement d'un terminal itinérant sur le premier réseau de téléphonie mobile, l'équipement de gestion d'identifiants étant relié à une interface externe d'itinérance du premier réseau de téléphonie mobile, l'identifiant d'abonnement transmis ayant été sélectionné par l'équipement de gestion d'identifiants dans une réserve d'identifiants d'abonnement préalablement définie, le procédé consistant en outre à créer, au moyen de l'équipement de gestion d'identifiants, un profil d'abonné spécifique pour l'eUICC et à mettre à jour un service d'abonnés avec ledit profil d'abonné, ledit profil d'abonné intégrant l'identifiant d'abonnement attribué à l'eUICC.

Suivant des modes particuliers de réalisation, le procédé comporte une ou plusieurs des caractéristiques suivantes, prises isolément ou suivant toutes les combinaisons techniquement possibles :
- le procédé consiste à transmettre à l'eUICC un identifiant d'abonnement temporaire et à créer un profil d'abonné temporaire, permettant à l'UE de s'attacher auprès du premier réseau de téléphonie mobile, le procédé consistant en outre à mettre en œuvre une procédure d'authentification forte entre l'eUICC et l'équipement de gestion d'identifiants.
- le procédé consiste, une fois l'eUICC authentifié, à établir une liaison sécurisée permettant un échange de clés diversifiées de l'eUICC vers l'équipement de gestion d'identifiants, puis à transmettre à l'eUICC un identifiant d'abonnement définitif et à créer un profil d'abonné définitif, ces étapes de transmission et/ou de création utilisant les clés diversifiées échangées.
- l'eUICC et l'équipement de gestion d'identifiants échangent des paramètres de chiffrement permettant de calculer, de part et d'autre, des crédentiels, ledit profil d'abonné intégrant lesdits crédentiels.
- l'équipement de gestion d'identifiants (reconnaît une eUICC à qui fournir un identifiant à partir d'un identifiant de l'eUICC reçu de l'eUICC et présent dans une liste d'identifiants d'eUICC mémorisée par l'équipement de gestion d'identifiants.
- le procédé comporte, en outre, une étape d'attribution dynamique d'un identifiant d'équipement (IMEI) à un module radio de l'UE.
- le procédé comporte, en outre, une étape d'attribution dynamique d'une adresse IP virtuelle pour l'UE en tant que source d'une communication.
- le procédé comporte, en outre, une étape d'attribution dynamique d'une adresse IP virtuelle pour chaque destinataire avec lequel l'UE a le droit de communiquer.

L'invention a également pour objet un système comportant un équipement utilisateur et un serveur d'identifiants pour la mise en oeuvre du procédé d'attribution dynamique d'identifiants précédent, comportant : un équipement utilisateur - UE, l'UE utilisant une interface radio d'un premier réseau de téléphonie mobile pour se connecter ; une carte «Embedded Universal Integrated Circuit Card » - eUICC résidant dans l'UE ; et un équipement de gestion d'identifiants relié à une interface externe d'itinérance du premier réseau de téléphonie mobile, l'équipement de gestion d'identifiants étant propre à : attribuer à l'eUICC un identifiant d'abonnement sélectionné dans une réserve d'identifiants d'abonnement mémorisée par l'équipement de gestion d'identifiant ; à transmettre à l'eUICC l'identifiant d'abonnement attribué dans un champ d'un message échangé conformément à un protocole standard d'attachement d'un terminal itinérant sur le premier réseau de téléphonie mobile ; à créer un profil d'abonné spécifique de l'eUICC ; et à mettre à jour un service d'abonnés avec ledit profil d'abonné, ledit profil d'abonné intégrant l'identifiant d'abonnement attribué à l'eUICC.

De préférence, l'équipement de gestion d'identifiants est associé à un serveur d'abonnés, ou « Home Subscriber Server », assurant ledit service d'abonnés.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation schématique d'une installation intégrant une infrastructure de radiocommunication et un système permettant la mise en oeuvre du procédé selon l'invention ;
La figure 2 est une représentation schématique sous forme de blocs du procédé selon l'invention ; et,
La figure 3 est un chronogramme des messages échangées dans l'installation de la figure 1 pour la réalisation de l'étape principale du procédé de la figure 2.

### GENERALITES

Le procédé selon l'invention permet d'attribuer des identifiants éphémères à une source et, avantageusement, au destinataire des communications issues de cette source, alors que la source est connectée à un réseau de téléphonie mobile intermédiaire.

Les identifiants éphémères sont notamment un identifiant matériel de la source (par exemple un IMEI), un identifiant d'abonnement de la source (par exemple l'IMSI), une adresse IP de la source et une adresse IP du destinataire.

Le procédé selon l'invention permet l'anonymisation des échanges entre la source et le destinataire et rend par conséquent toute communication sur le réseau intermédiaire intraçable, en particulier d'une communication issue de la source à l'autre. Elle rend également détectable toute usurpation par un acteur malveillant de l'identité éphémère attribuée à une source.

La mise en œuvre du procédé selon l'invention, est prévu côté réseau un équipement de gestion d'identifiants offrant en particulier un service d'attribution d'identifiants. Cet équipement est notamment connecté à une interface externe du réseau de téléphonie mobile intermédiaire afin de détecter les sources cherchant à s'enrôler auprès du réseau intermédiaire et qui sont abonnées au service d'attribution d'identifiants. Cet équipement est propre à attribuer et délivrer dynamiquement un jeu d'identifiants éphémère à la source et, avantageusement, au destinataire que la source cherche à atteindre. Cet équipement permet avantageusement de contrôler différents nœuds du réseau pour gérer la communication entre la source et la destination.

La mise en œuvre du procédé selon l'invention, est prévu côté source, un terminal, ou équipement utilisateur UE (« User Equipment ») du type comportant une carte de circuit intégré universelle embarquée, ou carte eUICC dans ce qui suit.

De manière générale, un carte eUICC (« Embedded Universal Integrated Circuit Card » en anglais) est une carte SIM (Subscriber Identity Module) qui présente la capacité de pouvoir être reprogrammée à distance via l'interface radio (programmation « Over The Air » - OAT ) par une machine, tel qu'un serveur SMDP (« Subscription Manager - Data Preparation »), du réseau auquel l'UE est connecté.

De la sorte, un utilisateur peut mémoriser plusieurs profils d'abonnement sur l'UE qu'il utilise, chaque profil correspondant à des abonnements avec des opérateurs différents et/ou, pour un même opérateur, pour des services différents (comme l'échange de données, les appels longue distance, etc.)

L'utilisation d'une carte eUICC est rendue nécessaire car l'identifiant le plus fondamental à modifier est l'identifiant IMSI (« International Mobile Subscriber Identity »). Cet identifiant est normalement mémorisé par une carte SIM (« subscriber identity/identification module ») qu'il n'est pas possible de modifier.

De manière spécifique à l'invention, l'UE est programmé pour mettre en œuvre certaines étapes du procédé. En conséquence, l'UE sera parfois dénommé client TIC/TAC. La carte eUICC est également programmée pour mettre en oeuvre certaines des étapes du procédé selon l'invention. La carte eUICC sera parfois dénommée carte TIC/TAC.

### SYSTEME

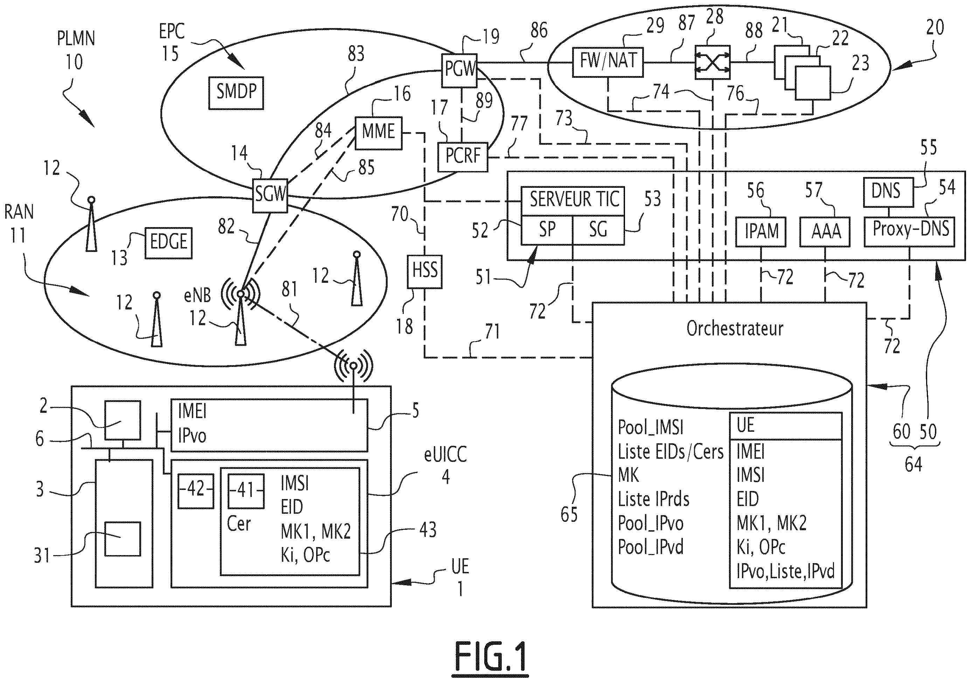

En se référant à la figure 1, un premier mode de réalisation du système selon l'invention va être présenté en détail.

Le système selon l'invention comporte un UE 1, ou client TIC/TAC 1, une infrastructure de radiocommunication, et un équipement de gestion d'identifiants 64.

La présente invention s'appuie sur une infrastructure de radiocommunication du type 3G, 4G ou 5G, telle que définit par le 3GPP (« 3rd Generation Partnership Project »). Dans ce qui suit, sera plus particulièrement pris pour exemple le cas d'une infrastructure du type 4G, mais l'homme du métier sait comment appliquer l'enseignement de la présente description au cas d'un autres types d'infrastructure, notamment une infrastructure du type 5G.

L'infrastructure de radiocommunication comporte un premier réseau 10, qui est un réseau de téléphonie mobile utilisé par l'UE 1 pour son interface air.

L'infrastructure de radiocommunication comporte un second réseau 20, par exemple un réseau privé sécurisé (tel qu'un centre de données), regroupant divers applications sensibles 21, 22, 23 sur des machines placées derrière un « firewall ».

Dans le présent mode de réalisation, ces applications sensibles sont les destinataires des communications de la source que constitue l'UE 1.

### Premier Réseau

Le réseau de téléphonie mobile 10 est un réseau relevant par exemple de la technologie 4G.

Il s'agit par exemple d'un PLMN (« Public Land Mobile Network »), qui offre un service de radiocommunication dans une région géographique (par exemple un pays spécifique) et qui est géré par un premier opérateur.

Le premier réseau 10 comporte un sous réseau d'accès radio 11, ou RAN (« Radio Access Network »), intégrant une pluralité de points d'accès 12, ou eNB (« e-Node B » en 4G). Un eNB permet à un UE de se connecter au moyen d'une liaison radio sans fil au premier réseau 10. Par exemple, l'UE1 est connecté (ou cherche à établir une connexion) au travers de la liaison 81 avec un eNB 12 du RAN 11.

Avantageusement, le protocole EDGE (« Enhanced Data Rates for GSM Evolution ») est mis en oeuvre par des machines 13 adaptées du RAN 11.

Le premier réseau 10 comporte un sous-réseau cœur 15, ou ePC (« evolved Packet Core » en 4G).

Ce sous-réseau cœur 15 comporte notamment :
- Une passerelle de service 14, ou SGW (« Serving Gateway »), qui s'occupe, au niveau « plan d'usage », de l'acheminement des flux « utiles » (les communications voix, le trafic data, etc.) entre le RAN 11 et le ePC 15.
- Un serveur MME (« Mobile Management Entity ») 16, qui gère, au niveau « plan de contrôle », les sessions (authentification, autorisations, session voix et donnée...) et la mobilité (localisation, « paging », « hand-over »,...) d'un UE connecté au RAN 11.
- Un serveur PCRF (« Policy and Charging Rules Function ») 17, qui rassemble, en temps réel, les informations en provenance et à destination du premier réseau 10, en établissant des règles et en prenant des décisions quant à la politique à appliquer à chaque abonné actif sur le premier réseau.
- Une passerelle 19, ou PGW (« Paquet Data Network Gateway ») responsable des échanges des flux « utiles » avec d'autres réseaux (publics ou privés), notamment avec l'Internet. Le PGW 19 est notamment connecté au second réseau 20.

Associé au premier réseau 10, un serveur d'abonnés ou serveur HSS (« Home Subscriber Server ») 18, propre à offrir un service d'abonnés. Le HSS 18 comporte une base de données des profils des abonnés du premier opérateur, avec leurs droits et leurs caractéristiques.

Sur la figure 1, différentes liaisons ont été représentées :
- La liaison 82 est une liaison de flux de données entre l'eNB 12 et le SGW 14,
- La liaison 83 est une liaison de flux de données entre le SGW 14 et le PGW 19.
- La liaison 84 est une liaison de données de contrôle entre le SGW 14 et le MME 16.
- La liaison 85 est une liaison de données de contrôle entre le eNB 12 et le MME 16.
- La liaison 89 est une liaison de données de contrôle entre le PGW 19 et le PCRF 17.

Le sous-réseau cœur ePC 15 présente des interfaces externes, par exemple une interface externe dite de « roaming » (dénommée « S6a » en 4G) entre le MME 16 et des HSS 18. Elle est représentée par la liaison 70.

### UE - client TIC/TAC

**L'UE 1 comporte** un moyen de calcul, tel qu'un processeur 2, un moyen de mémorisation, tel qu'une mémoire 3, un eUICC 4 et un module radio 5. Ces composants sont connectés par un bus de données adapté 6.

La mémoire 3 comporte les instructions de programmes d'ordinateur qui, lorsqu'elles sont exécutées par le processeur 2 permettent la mise en œuvre de certaines fonctionnalités. En particulier, la mémoire 3 comporte les instructions d'un programme 31 permettant la mise en œuvre par l'UE 1 de certaines des étapes du procédé selon l'invention.

Le module radio 2 est connu en tant que tel. Il stocke deux identifiants :
- L'IMEI (« International Mobile Equipment Identity »), qui est attribuée à l'UE 1 à la suite de la mise en œuvre du procédé selon l'invention ; et,
- L'IPvo : l'adresse IP (« Internet Protocol ») virtuelle attribuée à l'UE 1 origine de la communication à la suite de la mise en œuvre du procédé selon l'invention.

Le eUICC 4 comporte un moyen de calcul, tel qu'un processeur 42, et un moyen de mémorisation, tel qu'une mémoire 43.

La mémoire 43 comporte les instructions de programmes d'ordinateur qui, lorsqu'elles sont exécutées par le processeur 42 permettent la mise en œuvre de certaines fonctionnalités. En particulier, la mémoire 43 comporte les instructions d'un programme 41 permettant la mise en œuvre par eUICC 4 de certaines des étapes du procédé selon l'invention.

Par ailleurs, la mémoire 43 stocke différentes informations.

A un instant t1, avant la mise en œuvre du procédé selon l'invention, la mémoire 43 comporte :
- L'EID (« eUICC ID ») est un identifiant de l'eUICC 4 ;
- La clé maîtresse MK (« Master Key ») est une clé partagée avec le service d'attribution dynamique d'identifiants ;
- Les clés MK1, MK2 sont des clés diversifiées caractéristiques de l'eUICC 4 ; et,
- Des certificats Cer constituant une signature de l'eUICC 4.

A un instant t2, après la mise en œuvre du procédé selon l'invention, la mémoire 43 comporte, en outre :
- L'IMSI (« international mobile subscriber identity ») est un identifiant normalement attribué par un opérateur aux cartes SIM des UE dont les utilisateurs sont enregistrés/ont un abonnement auprès de cet opérateur ;
- ICCID (« integrated circuit card identifier « ), qui est un identifiant de la partie matériel de l'eUICC 4 ; et,
- Les Ki (« Subscriber Authentication Key ») et OPc (« derived operator code »), qui sont un exemple d'ensemble de clés permettant une authentification réciproque entre un abonné et un opérateur. Un tel ensemble de clés est parfois dénommé crédentiels ( « credentials »).

### Second Réseau

Le second réseau 20 est par exemple un réseau privé sécurisé.

Le second réseau 20 comporte un équipement réseau de sécurité, par exemple du type « firewall », nommé équipement FW/NAT 29. Sur commande de l'équipement de gestion d'identifiants 64 il effectue un nattage de l'adresse IP virtuelle attribuée à l'UE 1 et de l'adresse IP virtuelle attribuée au destinataire (application 21, 22 ou 23) sur les paquets de données circulant à travers l'équipement FW/NAT 29.

Le second réseau 20 comporte un ou plusieurs routeurs 28.

Le second réseau 20 comporte plusieurs machines offrant différents services en tant que destinataire de la communication issue de l'UE 1. Ces services sont par exemple des applications 21, 22, 23. Ces applications sont sensibles et doivent être protégées notamment contre des intrus usurpant l'adresse d'un équipement utilisateur ayant un droit d'accès.

La communication de flux de données entre les premier et second réseaux 10 et 20 s'effectue selon une liaison 86 entre le PGW 19 du premier réseau 100 et le FW/NAT 29 du second réseau. Il s'agit par exemple d'une communication selon le protocole TCP-IP, éventuellement en passant par un ou plusieurs réseaux intermédiaires, tels que notamment l'Internet.

Sur la figure 1, la communication de flux de données entre le FW/NAT 29 et le routeur 28 s'effectue selon une liaison 87 et la communication de flux de données entre le routeur 28 et les machines 21, 22 et 23 s'effectue selon une liaison 88.

### Equipement de gestion d'identifiants

L'équipement de gestion d'identifiants 64 est constitué par un ou plusieurs ordinateurs programmés pour réaliser certaines des étapes du procédé selon l'invention de manière à fournir un service d'attribution dynamique d'identifiants et, une fois ces identifiants attribués à une source et un destinataire, un service de gestion des communications entre la source et le destinataire.

L'équipement de gestion d'identifiants 64 est par exemple fondé sur une architecture du type SDN (« Software Defined Network »). Elle comporte alors une composante de contrôle réseau 50 et une composante applicative d'orchestration de services, ou orchestrateur, 60.

### Composante de contrôle réseau

La composante de contrôle réseau 50 comporte :
- un module DNS (« Domain Name System ») 55 et un module « proxy DNS » 54. Ces modules, associés à une fonctionnalité de cyber défense NMCD (« Network Management Cyber Defense ») de l'orchestrateur 60, participent à l'attribution et à l'utilisation d'une adresse IP virtuelle d'un destinataire. Ces modules sont reliés à l'orchestrateur 60 par une liaison du type REST API (« Application Programming Interface Representational State Transfer ») 72. Le module DNS 55 pourrait être positionné dans le second réseau 20 lui-même.
- un module IPAM (« IP address management » ) 56, participant à l'attribution et à l'utilisation d'une adresse IP virtuelle d'une source. Ce module est relié à l'orchestrateur 60 par une liaison du type API REST 72. Le module IPAM 56 pourrait être positionné dans le second réseau 20 lui-même.
- un module d'autorisation et d'authentification, dit module AAA (« Authentication, Authorization, Accounting/Auditing ») 57, pour la mise en oeuvre de mécanismes d'authentification sur la base de certificats, tel que par exemple le mécanisme EAP-TLS (« Extensible Authentication Protocol - Transport Layer Security »). Ce module est relié à l'orchestrateur 60 par une liaison du type API REST 72. Le module AAA 57 pourrait être positionné dans le second réseau 20 lui-même.
- un module serveur d'attribution dynamique d'identifiants, ou serveur TIC/TAC 51, participant à l'attribution et l'utilisation d'une IMSI éphémère à une source. Le serveur TIC/TAC 51 est relié à l'orchestrateur 60 par une liaison du type API REST 72. Le serveur TIC/TAC 51 est relié à l'interface externe de roaming 70 du premier réseau 10. Le serveur TIC/TAC 51 peut être identifié comme un AuC («Authentication Center »), mais ne présente aucune des autres fonctionnalités d'un HSS. Le serveur TIC/TAC 51 comporte par exemple un sous-module SP 52 ayant pour fonction d'identifier des UEs abonnés au service d'attribution dynamique d'identifiants et de mettre en oeuvre le protocole de transfert d'un ISMI éphémère, ainsi qu'avantageusement un sous-module SG 53 ayant pour fonction de simplifier la gestion des clefs et des droits des UEs abonnés au service.

### Orchestrateur

La composante d'orchestration de services 60 a pour fonction de synchroniser les différents services, notamment l'attribution et la gestion des identifiants éphémères, la gestion de la mobilité, et le contrôle de l'unicité des communications.

L'orchestrateur 60 gère les différents modules de la composante de contrôle réseau 50.

De plus, l'orchestrateur 60 est relié au HSS 18 par une liaison 71 du type API REST.

L'orchestrateur 60 est relié au PCRF 17 par une liaison 77 du type interface Rx.

L'orchestrateur 60 est relié au PGW 19 par une liaison 73 du type interface SGi Radius.

L'orchestrateur 60 est relié au FW/NAT 29 et au routeur 28 par des liaisons 74 du type interface REST Yang.

L'orchestrateur 60 est relié aux machines associées aux applications 21, 22, 23 par une liaison 76 du type API REST.

La composante d'orchestration de services 60 tient à jour une base de données 65.

La base de données 65 comporte les données nécessaires à l'attribution d'identifiants éphémères à un abonné au service et, une fois une identité éphémère attribuée, le contrôle des noeuds du réseau pour permettre la communication entre la source et le destinataire.

En particulier, la base de données 65 comporte :
- Une réserve (ou « pool ») d'IMSI ;
- Une liste des EID des UE abonnés auprès du service et les certificats Cer de chacun de ces UE ;
- La clé maîtresse MK du service d'attribution dynamique d'identifiants ;
- Une liste des adresses IP réelles des destinataires, tels que les applications 21, 22, 23 sur le second réseau 20 ;
- Une réserve d'adresses IP virtuelles pour des sources, IPvo; et,
- Une réserve d'adresses IP virtuelles pour les destinataire, IPvd.

Et, pour chaque UE utilisant effectivement le service à un instant donné, la base de données 65 comporte en outre :
- L'IMEI courante de cet UE ;
- L'IMSI courante de cet UE ;
- L'EID de cet UE ;
- Les clés diversifiées MK1, MK2 de cet UE ;
- Les credentiels Ki et OPc de cet UE ;
- L'adresse IP virtuelle IPvo attribuée à cet UE ; et,
- Une liste d'adresses IP virtuelles L_IPvd, attribuées aux destinataires que cet UE a le droit d'atteindre.

### PROCEDE

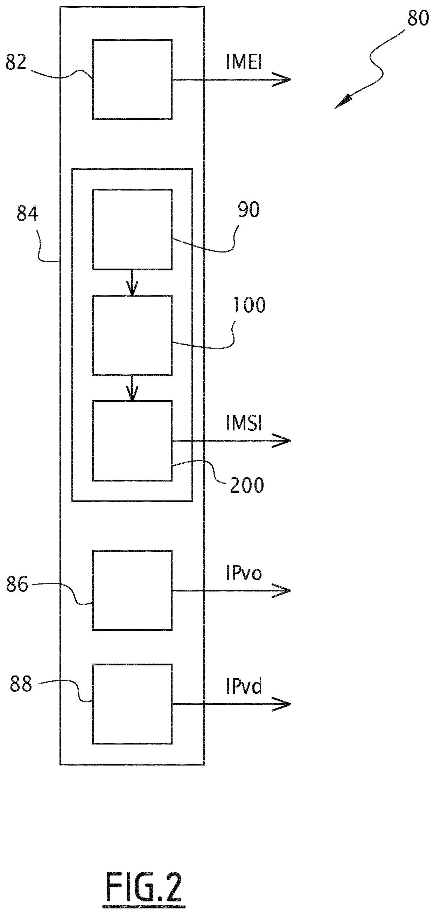

Comme représenté sur la figure 2, selon un mode de réalisation préféré, le procédé 80 comporte l'attribution dynamique d'un IMEI (partie 82 du procédé), d'un IMSI (partie 84), d'une adresse IP virtuelle origine (partie 86) et une adresse IP virtuelle destination (partie 88).

### Attribution d'IMEI

L'IMEI est un identifiant du module radio 5 de l'UE 1.

Par exemple, lorsque l'UE 1 est mis sous tension, l'application TIC/TAC 31 est exécutée et commence par calculer un IMEI éphémère pour le module radio 2. Par exemple, l'IMEI est tiré aléatoirement. Le résultat de ce calcul est passé au module radio 5, qui étiquettera les paquets de données qu'il émettra au cours de la communication avec cet IMEI éphémère.

A la prochaine utilisation de l'UE 1, une autre valeur de l'IMEI sera calculée.

Ainsi, l'identifiant de la partie matérielle de l'équipement utilisateur est changée et n'est plus caractéristique du module radio 5 ou de la carte eUICC 4.

### Attribution d'IMSI

L'identifiant d'abonnement est l'identifiant que la présente invention contribue principalement à modifier dynamiquement.

Cette seconde partie 84 du procédé 80 comporte une première phase 100 d'enrôlement d'un UE 1 auprès du service d'attribution dynamique d'identifiants. Cette enrôlement consiste à fournir à l'UE 1 un profil temporaire, qui n'est pas traçable. La fourniture de ce profil temporaire s'effectue cependant sur la base d'une authentification faible de l'UE 1 auprès du service d'attribution dynamique d'identifiants. Par authentification faible on entend la mise en oeuvre d'une procédure d'authentification fondée par exemple sur la transmission par l'UE 1 au service d'un identifiant particulier, et/ou une authentification unilatérale, et/ou une authentification avec une clé de chiffrement générique.

La première phase 100 se poursuit alors avantageusement par une authentification forte de l'UE 1 auprès du service. Par authentification forte on entend la mise en oeuvre d'une procédure d'authentification mutuelle et robuste de l'UE 1 et du service, fondée par exemple sur l'échange de signatures. Une authentification réussie permet alors à l'UE 1 d'accéder pleinement au service d'attribution dynamique d'identifiants et aux ressources associées.

Ceci permet notamment de fournir ensuite à l'UE 1 un profil définitif. Par exemple, un tunnel sécurisé est établi pour transmettre des clés diversifiées MK1 et MK2 de l'UE 1 vers le service et, dans une seconde phase 200 du procédé, un profil définitif est associé à l'UE 1. Ce profil définitif n'est également pas traçable.

Cette partie du procédé s'appuie sur un mécanisme d'échange de données cachées dans les champs des messages classiquement échangés lors de l'enrôlement d'un équipement utilisateur auprès d'un réseau de radio téléphonie, tel que le premier réseau 10. Ce mécanisme est par exemple décrit dans la demande de brevet EP 3 506 668.

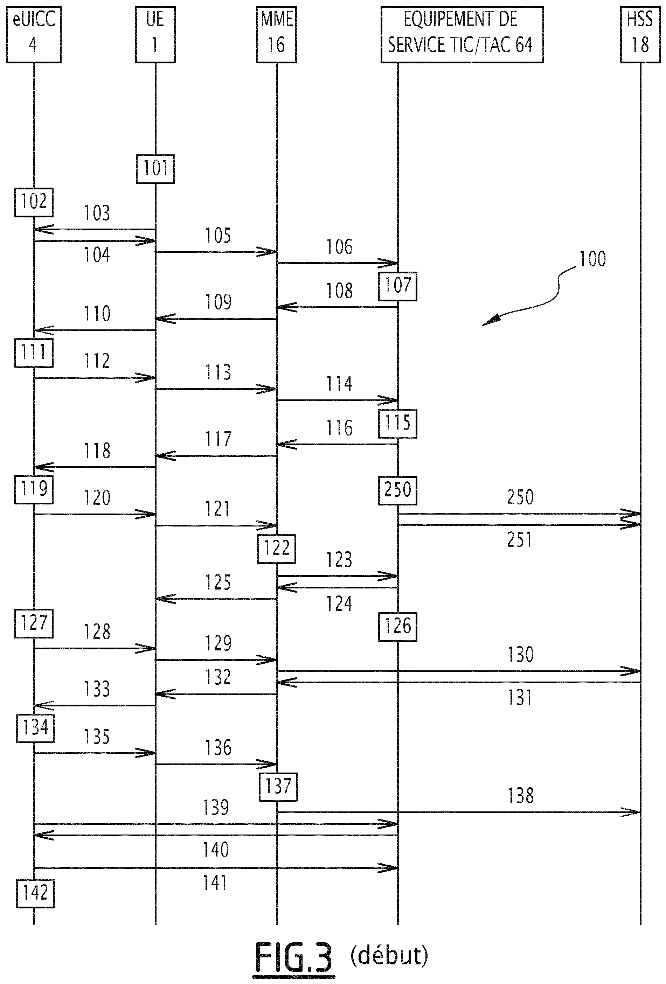

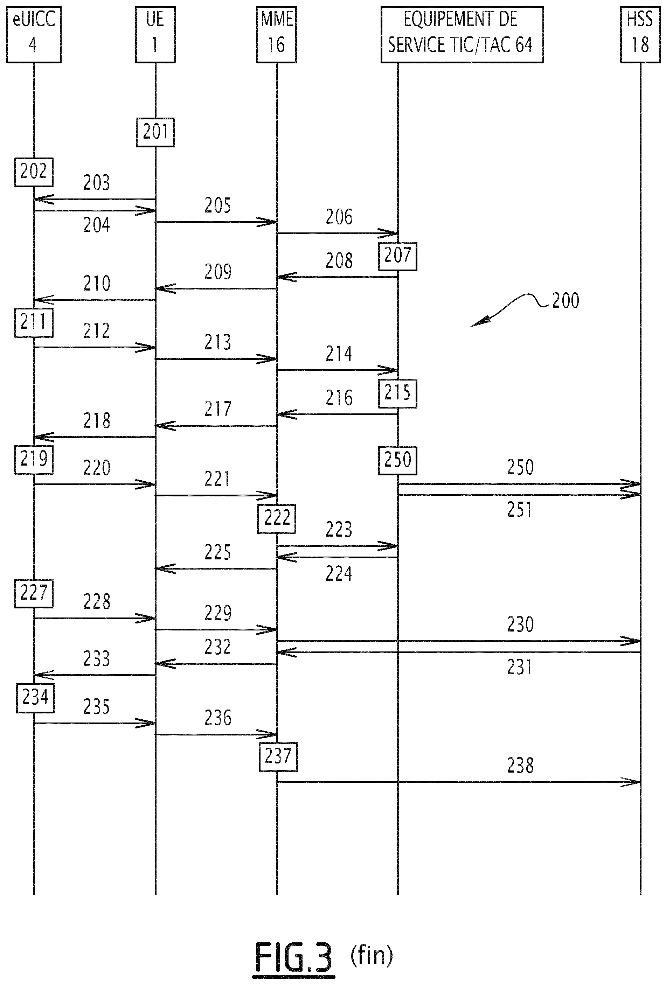

Un mode de réalisation de cette seconde partie 84 est illustré sur la figure 3.

Dans une étape initiale 90, est fournie à l'équipement 64 une réserve d'IMSI. Cette réserve d'IMSI comporte une pluralité d'IMSI réservés pour le service d'attribution dynamique d'identifiants. Cette liste provient par exemple d'un opérateur.

Avantageusement, d'autres identifiants secondaires, tels que le MSISDN («Mobile Station ISDN) et l'ICCID («integrated circuit card identifier »), peuvent être fournis à l'UE 1 en même temps et de la même façon que l'IMSI. Pour simplifier la description, seul l'IMSI est considéré dans ce qui suit.

A ce stade, rien n'est provisionné sur le HSS 18 associé.

### Première phase

Dans cette première phase, l'UE 1 va d'abord utiliser un premier IMSI, e-IMSI1, généré aléatoirement pour s'enrôler auprès du premier réseau. Cet IMSI va être identifiée par le premier réseau 10 comme relevant d'un autre réseau. Le premier réseau va donc chercher à connaître les droits d'itinérance (« roaming ») de cet UE 1. Le serveur TIC/TAC 51 va en profiter pour récupérer l'EID de l'UE 1, et lui renvoyer un IMSI temporaire, t-IMSI. Le t-IMSI va permettre de mettre en oeuvre une procédure d'authentification forte et, en cas de succès de cette identification, d'établir une liaison tunnel pour l'échange sécurisé des clés diversifiées de l'UE 1 vers l'équipement 64.

De manière plus précise, côté réseau 10 :
Etape 101 : l'utilisateur allume l'UE 1.
Etape 102 : la carte TIC/TAC 4 ne détecte aucun IMSI définitif dans sa mémoire 43 et calcule alors, de façon aléatoire, un premier IMSI, e-IMSI1. En variante, est préenregistré sur la carte TIC/TAC 4 un IMSI origine permettant une signature publique ou un IMSI référence associé à un PLMN tiers, de nature à forcer le MME 16 à utiliser son interface de roaming.
Etape 103 : Pour s'enrôler au réseau 10, l'UE 1 demande à la carte TIC/TAC 4 une IMSI.
Etape 104 : la carte TIC/TAC 4 renvoie la valeur de l'e-IMSI1, calculée à l'étape 102.
Etape 105 : l'UE 1 cherchant à se connecter au premier réseau 10, émet une requête d'attachement vers le MME 16. Cette requête d'attachement comporte le e-IMSI1.
Etape 106 : Suite à la réception de la requête d'attachement, le MME 16 constatant que l' e-IMSI1 ne correspond pas à une IMSI associée au premier réseau 10, émet une demande d'authentification sur son interface externe 70 auprès du HSS 18.
Etape 107 : le serveur TIC/TAC 51, connecté à l'interface externe 70, intercepte la demande d'authentification. Le serveur TIC/TAC 51 demande en réponse à la carte TIC/TAC 4 son EID pour pouvoir l'identifier comme l'un des abonnés au service d'attribution dynamique d'identifiants. Cette demande est masquée dans une demande d'authentification classique.
Etape 108 : une requête d'authentification est transmise du serveur TIC/TAC 51 vers le MME 16.
Etape 109 : une requête d'authentification est transmise du MME 16 vers l'UE 1.
Etape 110 : une requête d'authentification est transmise de l'UE 1 vers la carte TIC/TAC 4.
Etape 111 : suite à la réception de la requête d'authentification, la carte TIC/TAC 4 lit l'EID présente dans sa mémoire 43 et le crypte avec la clé maîtresse MK associée au service.
Etape 112 : la carte TIC/TAC 4 répond à la requête d'authentification de l'UE 1 en lui passant l'EID chiffré, MK(EID).
Etape 113 : l'UE 1 répond à la requête d'authentification du MME 16 par un message classique d'échec de l'authentification. Ce message comporte l'EID chiffré.
Etape 114 : le MME 16 transmet sur son interface externe 70 un message d'échec d'authentification. Ce message est intercepté par le serveur TIC/TAC 51.
Etape 115 : l'équipement 64, qui dispose de la clé maîtresse MK, décrypte l'EID. Il vérifie que l'EID est présent dans la liste des EID des abonnés au service. Si l'EID reçu n'est pas dans la liste des EID (ou correspond à un EID volé), une commande est envoyée à la carte TIC/TAC 4 de l'UE 1 pour bloquer son PIN et seul l'utilisation d'un code PUK pour cet EID permettra de débloquer l'UE 1.

Si l'EID reçu est listé dans la liste des EID comme abonné au service, l'équipement 14 sélectionne un IMSI temporaire, t-MSI, dans la réserve d'IMSI.

Le serveur TIC/TAC 51 de l'équipement 64 chiffre le t-IMSI au moyen de la clé maitresse MK et transmet à la carte TIC/TAC 4 le t-IMSI crypté, MK(t-IMSI), ainsi qu'un nombre aléatoire RAND, et un résultat de chiffrement XRES. Cette transmission s'effectue en masquant ces informations dans une nouvelle demande d'authentification de la carte TIC/TAC 4.

Etape 116 : une requête d'authentification est ainsi transmise du serveur TIC/TAC 51 vers le MME 16.

Etape 117 : le MME 16 conserve le XRES et retransmet la requête d'authentification vers l'UE 1.

Etape 118 : la requête d'authentification est retransmise de l'UE 1 vers la carte TIC/TAC 4.

Etape 119 : la carte TIC/TAC 4 calcule un résultat RES à partir de RAND et t-IMSI.

Etape 120 : la carte TIC/TAC 4 répond à la requête d'authentification de l'UE 1 par un message intégrant le résultat RES.

Etape 121 : l'UE 1 répond à la requête d'authentification du MME 16 par un message intégrant le résultat RES.

Etape 122 : le MME compare le RES et le XRES.

Etape 123 : ces grandeurs étant identiques, le MME 16 retransmet la réponse d'authentification sur l'interface externe 70. La réponse d'authentification est interceptée par le serveur TIC/TAC 51.

Etape 124 : le serveur TIC/TAC 51 renvoie un message d'erreur d'authentification vers le MME 16.

Etape 125 : le MME 16 rejette la demande d'attachement de l'UE 1.

Du point de vue du MME 16 , c'est-à-dire du premier réseau 10, il n'y a donc eu qu'un échange de messages d'authentification ayant conduit à un échec d'authentification, alors que l'équipement 64 a pu récupérer l'IMEI et l'EID de la carte TIC/TAC 4 et celle-ci un IMSI temporaire.

Etape 126 : le serveur TIC/TAC 51 (sous-module SG 53) calcule, à partir de la t-IMSI attribué à la carte TIC/TAC 4, de la clé maîtresse MK, et du nombre aléatoire RAND envoyé à la carte TIC/TAC 4, un Ki1 et un OPc1.

Le serveur TIC/TAC 51 transmet ces crédentiels à l'orchestrateur 60 pour qu'il provisionne, via la liaison 71, le HSS 18 avec les informations de ce nouvel utilisateur qu'est la carte TIC/TAC 4 de l'UE 1. L'équipement 64 fournit le t-IMSI (éventuellement t-ICCID), l'IMEI, le Ki et l'OPc. Il indique également et de préférence les ressources informatiques ou de télécommunication afin de répondre aux besoins de l'utilisateur.

Etape 127 : la carte TIC/TAC 4 mémorise le t-IMSI à la place de e-IMSI1 et calcule les Ki1 et OPc1, avec sa clé maîtresse MK et le nombre aléatoire RAND reçu du serveur TIC/TAC 51.

Finalement, la carte TIC/TAC 4 commande un redémarrage du module radio 5 qui va permettre un attachement au HSS 18 avec le t-IMSI. Avantageusement, la carte TIC/TAC 4 contrôle que cette connexion reste temporaire et ne se prolonge pas au-delà par exemple de deux minutes.

Etape 128 : la carte TIC/TAC 4 rafraichit les informations du module radio 5 de l'UE 1 en lui indiquant le t-IMSI.

Etape 129 : l'UE 1 cherchant à se connecter au premier réseau 10, émet une requête d'attachement vers le MME 16. Cette requête d'attachement intègre le t-IMSI.

Etape 130: Suite à la réception de la requête d'attachement, le MME 16 émet une demande d'authentification sur son interface externe de « roaming » 70. Cette requête d'attachement comporte le t-IMSI.

Etape 131 : le serveur HSS 18, maintenant convenablement provisionné avec le profil temporaire de l'UE 1, répond par un message de demande d'authentification avec les paramètres RAND, XRES, AUTN nécessaires à une authentification mutuelle à réaliser au niveau du MME 16.

Etape 132 : Certains de ces paramètres sont mémorisés par le MME 16 tandis qu'il retransmet les autres dans le message d'authentification vers l'UE 1.

Etape 133 : le message d'authentification est retransmis de l'UE 1 à la carte TIC/TAC 4.

Etape 134 : la carte TIC/TAC 4, après vérification positive du XAUTN, calcul un RES.

Etape 135 : la carte TIC/TAC 4 transmet le RES à l'UE 1.

Etape 136 : l'UE 1 transmet le RES au MME 16.

Etape 137 : le MME compare le RES et le XRES, et, ces deux grandeurs étant effectivement identiques, le MME 16 accepte l'attachement de l'UE 1.

Etape 138 : De manière conventionnelle, une fois l'attachement accepté, le MME 16 transmet au HSS 18 une information de localisation de l'UE 1.

Etapes 139-140 : une fois l'UE 1 attaché au premier réseau avec son profil temporaire (t-IMSI), une procédure d'authentification forte est de préférence mise en œuvre. Par exemple, l'UE 1 s'authentifie auprès de l'orchestrateur 60 et du service AAA 57 (échange de certificats Cer conformément au protocole EAP-TLS), via et la liaison 73. En cas d'authentification positive, l'UE 1 peut bénéficier des services gérés par l'équipement 64, notamment l'accès aux ressources du second réseau 20.

En particulier, le procédé se poursuit par l'établissement d'un tunnel sécurisé à travers le premier réseau 10, entre l'UE 1 et le PGW 19 (convenablement contrôlé par l'orchestrateur 60).

Etape 141 : la carte TIC/TAC 4 transmet alors ses clés diversifiées MK1 et MK2 à l'orchestrateur 60 (via le PGW 19 et la liaison 73). A cet instant, l'orchestrateur 60 connaît donc l'EID et les clés MK1 et MK2 de la carte TIC/TAC 4.

Etape 142 : La carte TIC/TAC 4 se détache automatiquement du réseau 10 de manière à fermer le tunnel sécurisé.

### Seconde phase

Etape 201 : l'UE 1 redémarre.

Etape 202 : La carte TIC/TAC 4 calcule alors, de façon aléatoire, un second IMSI, e-IMSI2.

Etape 203 : l'UE 1 demande à la carte TIC/TAC 4 un IMSI.

Etape 204 : la carte TIC/TAC 4 envoie la valeur de l'e-IMSI2.

Etape 205 : l'UE 1 cherchant à se connecter au réseau, émet une requête d'attachement vers le MME 16 du premier réseau 10. Cette requête d'attachement comporte le e-IMSI2.

Etape 206 : Suite à la réception de la requête d'attachement, le MME 16 émet une demande d'authentification auprès du HSS 18.

Etape 207 : le serveur TIC/TAC 51, qui écoute l'interface externe 70, intercepte la demande d'authentification.

Etape 208 : serveur TIC/TAC 51 demande alors à l'UE 1, l'ElD de la carte TIC/TAC 4. Cette demande est masquée dans une demande d'authentification.

Etape 208 : Une requête d'authentification est transmise du serveur TIC/TAC 51 vers le MME 16.

Etape 209 : Une requête d'authentification est transmise du MME 16 à l'UE 1.

Etape 210 : Une requête d'authentification est transmise de l'UE 1 à la carte TIC/TAC 4.

Etape 211 : La carte TIC/TAC 4 lit son EID et le crypte avec sa clé maîtresse MK.

Etape 212 : la carte TIC/TAC 4 répond à la requête d'authentification de l'UE 1 en lui passant l'EID chiffré, MK(EID).

Etape 213 : l'UE 1 répond à la requête d'authentification du MME 16 par un message classique d'échec de l'authentification. Ce message masque comme attribut l'EID chiffré : MK(EID).

Etape 214 : le MME 16 transmet au HSS 18 un message d'échec d'authentification. Ce message est intercepté par le serveur TIC/TAC 51.

Etape 215 : le serveur TIC/TAC 51 déchiffre l'ElD. Le serveur TIC/TAC 51 interroge l'orchestrateur 60 pour savoir s'il dispose des clés diversifiées pour cet EID et, dans l'affirmative, reçoit les informations correspondantes ainsi qu'un IMSI définitif, d-IMSI, choisi dans la réserve d'IMSI. Le serveur TIC/TAC 51 chiffre le d-IMSI au moyen de la clé MK1 afin de la transmettre à la carte TIC/TAC 4, ainsi qu'un nombre aléatoire RAND et un résultat de chiffrement XRES.

Cette transmission s'effectue au moyen d'une nouvelle demande d'authentification de la carte TIC/TAC 4.

Etape 216 : Une requête d'authentification est ainsi transmise serveur TIC/TAC 51 vers le MME 16.

Etape 217 : le MME 16 conserve le XRES et retransmet une requête d'authentification à l'UE 1.

Etape 218 : Une requête d'authentification est transmise de l'UE 1 à la carte TIC/TAC 4.

Etape 250 : parallèlement, le serveur TIC/TAC 51 calcule, avec la clé MK2 de la carte TIC/TAC 4 et le nombre aléatoire RAND transmis, un second ensemble de credendiels, Ki2 et un OPc2.

Etape 251 : l'équipement 14, via la liaison 71, déprovisionne la t-IMSI du serveur HSS 18 et provisionne, via la liaison 71, le serveur HSS 18. L'équipement 14 indique les identifiants du nouvel utilisateur : d-IMSI, IMEI, Ki2 et l'OPc2. D'autres informations du profil utilisateur peuvent avantageusement être enregistrées dans le HSS 18, telles que les services ou les ressources associés à ce nouvel utilisateur.

Etape 219 : la carte TIC/TAC 4 calcule un résultat RES à partir du RAND, et du d-IMSI.

Etape 220 : la carte TIC/TAC 4 répond à la requête d'authentification de l'UE 1 par un message intégrant le résultat RES.

Etape 221 : l'UE 1 répond à la requête d'authentification du MME 16 par un message intégrant le résultat RES.

Etape 222 : le MME 16 compare le RES et le XRES.

Etape 223 : ces grandeurs étant identiques, le MME 16 retransmet la réponse d'authentification vers le HSS 18. La réponse d'authentification est interceptée par le serveur TIC/TAC 51.

Etape 224 : le serveur TIC/TAC 51 répond par un message d'erreur au MME 16.

Etape 225 : le MME rejette la demande d'attachement de l'UE 1.

Etape 227 : la carte TIC/TAC 4 ayant récupéré le d-IMSI, le mémorise à la place de la e-IMSI2. Puis la carte TIC/TAC 4 calcule des crédentiels Ki et OPc avec sa clé MK2 et le nombre aléatoire RAND reçu de l'équipement 14. Finalement, la carte TIC/TAC 4 commande un redémarrage du module radio 5 qui va permettre un attachement au HSS 18 avec le d-IMSI reçu.

Etape 228 : la carte TIC/TAC 4 commande un rafraichissement des informations de profil utilisé par le module radio 5 de l'UE 1 en lui indiquant la valeur du d-IMSI.

Etape 229 : l'UE 1 se connecte au premier réseau 10 en émettant une requête d'attachement vers le MME 16. Cette requête d'attachement comporte le d-IMSI.

Etape 230 : Suite à la réception de la requête d'attachement, le MME 16 émet une demande d'authentification auprès du HSS 18. Cette requête d'attachement comporte le d-IMSI.

Etape 231 : le serveur HSS 18, qui a été provisionné avec le profil définitif de cet utilisateur, répond par un message de confirmation avec les paramètres RAND, XRES, AUTN nécessaires à une authentification mutuelle réalisée au niveau du MME 16.

Etape 232 : Certains de ces paramètres sont mémorisés par le MME 16 tandis que le MME 16 retransmet les autres dans le message d'authentification vers l'UE 1.

Etape 233 : le message d'authentification est retransmis de l'UE 1 à la carte TIC/TAC 4.

Etape 234 : la carte TIC/TAC 4, après calcul du XAUTN et vérification qu'il correspond au AUTN, calcul le RES.

Etape 235 : la carte TIC/TAC 4 transmet le RES à l'UE 1.

Etape 236 : l'UE 1 transmet le RES au MME 16.

Etape 237 : le MME compare le RES et le XRES et, ces deux grandeurs étant effectivement identiques, le MME 16 accepte l'attachement de l'UE 1.

Etape 238 : de manière conventionnelle, une fois l'attachement accepté, le MME 16 transmet au HSS 18 une information de localisation de l'UE 1.

Ainsi, suite à la détection par l'équipement de service 64 d'une demande d'enrôlement d'un nouveau terminal auprès du premier réseau de téléphonie mobile, un profil (incluant un IMSI éphémère et des crédentiels associés) a été généré par l'équipement de gestion d'identifiants 64. Parallèlement à la transmission au terminal de ce profil, un serveur HSS associé au premier réseau a été provisionné avec ce profil. Ceci permet un enrôlement du terminal mobile sur le premier réseau avec un profil éphémère.

De nombreuses variantes de cette partie du procédé sont envisageables. On pourrait notamment ne mettre en œuvre que la première partie, si l'on estime que la transmission d'un IMSI éphémère (t-IMSI) par chiffrement avec une clé partagée (clé maîtresse MK) offre un niveau de sécurité suffisant.

Par ailleurs, lorsque un nouveau terminal cherche à s'enrôler en indiquant un EID (ou un certificat) à l'équipement 64, la vérification que cet EID (ce certificat) est celui d'un abonné pouvant bénéficier du service peut comporter une étape de contrôle effectuée manuellement par un opérateur, via une interface homme-machine connectée à l'équipement 64.

### Attribution d'IP virtuelle origine

A l'étape 86, pour l'allocation dynamique d'une adresse IP à l'UE 1, ou IP virtuelle origine IPvo, l'équipement 64 met en oeuvre le module IPAM 56. Le mécanisme mis en oeuvre est connu en soi. Il permet d'attribuer une adresse IP à l'UE1 parmi la réserve d'adresses IP, Pool_IPvo, de la base de données 65. L'équipement 64 transmet l'IPvo choisi à l'ePC 15, qui a son tour la transmet à l'UE 1.

### Attribution d'IP virtuelle destination

A l'étape 88, pour l'allocation dynamique d'une adresse IP au destinataire, ou IP virtuelle destinataire IPvd, l'équipement 64 met par exemple en oeuvre le mécanisme présenté dans la demande de brevet FR n° 20 09408, déposée le 17 septembre 2020. Sont notamment utilisés les modules DNS 55 et Proxy DNS 54.

Est ainsi associé à l'adresse IP de l'UE 1 (IPvo) une liste d'adresses IP virtuelles (L_IPvd) des destinataires possibles de l'UE 1. Ces adresses virtuelles pour les destinataires sont choisies dans la réserve d'adresses IP, Pool_IPvd.

L'adresse IP réelle du destinataire IPrd, c'est-à-dire de la machine exécutant les applications 21, 22 ou 23 n'est jamais communiquée à une UE, mais est remplacée par une adresse IP virtuelle, qui est temporaire et unique par UE enregistrée auprès du service, et, qui, de préférence, n'est valide que pendant la durée de la session entre cet UE et le destinataire.

Avantageusement, l'équipement 64 ne détermine des adresses virtuelles à associer à l'UE 1 uniquement lorsque l'UE 1 émet une requête de résolution de nom de domaine vers le DNS 55. La réponse à une telle requête est l'adresse IP virtuelle du destinataire recherché.

De préférence, l'équipement 64 ne détermine des adresses virtuelles que pour les applications que l'utilisateur de l'UE 1 a le droit de consulter.

L'équipement 64 est propre à paramétrer le firewall FW/NAT 29 pour substituer, dans un paquet entrant sur le second réseau 20, l'adresse virtuelle d'une application par son adresse réelle et inversement dans un paquet sortant du second réseau 20, l'adresse réelle d'une application par son adresse virtuelle.

L'équipement 64 est propre à paramétrer le ou les routeurs 28 du second réseaux 20 pour orienter les flux de données. Par exemple, si l'équipement 64 détecte des flux de données suspects usurpant les identités des certains UE abonnés au service, il peut paramétrer les routeurs 28 pour envoyer ces flux vers des applications leurres.

C'est bien l'orchestrateur 60 qui tient à jour une table de correspondance entre identité réelle et virtuelle d'une source, et, pour cette source, une correspondante entre identité réelle et virtuelle d'une destination.

Finalement, à l'issue de ces étapes, l'UE 1 peut établir une communication avec l'application voulue.

### VARIANTES

Le mode de réalisation décrit précédemment est celui d'un équipement de gestion des identifiants 64 coopérant avec un second réseau 20 du type réseau privé et un HSS 18. Mais, de nombreuses implémentations alternatives sont envisageables.

En variante, l'équipement 64 coopère avec un BSS/OSS (« Business Support System / Operations Support System ») en plus ou à la place d'un HSS. Celui-ci peut par exemple calculer les credentials du nouvel utilisateur à la place du sous module SG 53, qui n'est alors plus nécessaire.

En variante, le serveur TIC/TAC 51 est sur le premier réseau 10 ou sur le second réseau 20.

Le second réseau peut être un réseau de téléphonie mobile (ou tout au moins le cœur d'un tel réseau).

En variante, le destinataire est un autre UE sur le premier réseau ou un autre réseau de téléphonie mobile.

### AVANTAGES

La présente invention permet de gérer localement et dynamiquement la souscription d'un terminal mobile auprès d'un réseau de téléphonie mobile et d'allouer à ce terminal (ainsi qu'au destinataire de ses communications) une identité éphémère (IMSI, IMEI, IP, Ki, OPc, etc.)

Par éphémère, on entend des informations ayant une validité limitée dans le temps (i.e. à courte durée de vie).

L'allocation d'une nouvelle identité ou la mise à jour d'une identité est réalisable à n'importe quel instant.

L'allocation d'une identité éphémère, non traçable, permet ensuite de réaliser une authentification forte donnant au terminal mobile autorisé la capacité d'accéder à des ressources critiques, par exemple hébergées sur un réseau privé.

La mise en oeuvre de l'invention permet donc une vraie discrétion des échanges.

L'art antérieur nécessite la mise en œuvre de serveurs de provisionnement, par exemple SMDP, qui sont généralement centralisés et ne permettent pas la création dynamique de profils d'abonné et plus généralement un provisionnement de théâtre.

L'invention permet donc de simplifier la gestion du provisionnement des profils dans les eUICC des terminaux, ainsi que la configuration des cœurs de réseau avec ces profils.

L'invention permet de synchroniser l'enrôlement avec l'accès aux services critiques et permettre de gérer dynamiquement le caractère éphémère des communications.

L'invention permet de contrôler l'unicité de chaque communication éphémère. Aucune duplication d'une communication en totalité ou partiellement n'est possible.

Aucun pré-enregistrement n'est nécessaire au niveau du terminal mobile, ni au niveau du serveur TIC/TAC (hormis une réserve d'IMSI). Le provisionnement du HSS est dynamique via l'équipement de gestion d'identifiants. Ceci permet une forte résilience au vol des terminaux (i.e. de l'EID et de la MK).

## Revendications

1. Procédé d'attribution dynamique d'identifiants (80), le procédé consistant à attribuer au moins un identifiant d'abonnement (IMSI) à une carte de circuit intégré universelle embarquée - eUICC (4) résidant dans un équipement utilisateur - UE (1), le procédé consistant à transmettre par un équipement de gestion d'identifiants (64), au travers d'un premier réseau de téléphonie mobile (10) dont une interface radio (11) est utilisée par l'UE (1) pour faire une demande d'authentification qui n'aboutira pas à un attachement au réseau, un identifiant d'abonnement (IMSI) dans un champ d'un message échangé conformément à un protocole standard d'attachement d'un terminal itinérant sur le premier réseau de téléphonie mobile (10), l'équipement de gestion d'identifiants (64) étant relié à une interface externe d'itinérance (70) du premier réseau de téléphonie mobile (10), l'identifiant d'abonnement (IMSI) transmis ayant été sélectionné par l'équipement de gestion d'identifiants (64) dans une réserve d'identifiants d'abonnement préalablement définie, le procédé consistant en outre à créer, au moyen de l'équipement de gestion d'identifiants (64), un profil d'abonné spécifique pour l'eUICC (4) et à mettre à jour un service d'abonnés avec ledit profil d'abonné, ledit profil d'abonné intégrant l'identifiant d'abonnement attribué à l'eUICC.

2. Procédé selon la revendication 1, consistant à transmettre à l'eUICC (4) un identifiant d'abonnement temporaire et à créer un profil d'abonné temporaire, permettant à l'UE (1) de s'attacher auprès du premier réseau de téléphonie mobile (10), le procédé consistant en outre à mettre en oeuvre une procédure d'authentification forte entre l'eUICC (4) et l'équipement de gestion d'identifiants (64).

3. Procédé selon la revendication 2, consistant, une fois l'eUICC (4) authentifié, à établir une liaison sécurisée permettant un échange de clés diversifiées de l'eUICC vers l'équipement de gestion d'identifiants (64), puis à transmettre à l'eUICC un identifiant d'abonnement définitif et à créer un profil d'abonné définitif, ces étapes de transmission et/ou de création utilisant les clés diversifiées échangées.

4. Procédé selon l'une quelconque des revendications 1 à 3, dans lequel l'eUICC (4) et l'équipement de gestion d'identifiants (64) échangent des paramètres de chiffrement permettant de calculer, de part et d'autre, des crédentiels, ledit profil d'abonné intégrant lesdits crédentiels.

5. Procédé selon l'une quelconque des revendications 1 à 4, dans lequel l'équipement de gestion d'identifiants (64) reconnaît une eUICC (4) à qui fournir un identifiant à partir d'un identifiant de l'eUICC reçu de l'eUICC et présent dans une liste d'identifiants d'eUICC mémorisée par l'équipement de gestion d'identifiants (64).

6. Procédé selon l'une quelconque des revendications 1 à 5, comportant, en outre, une étape (82) d'attribution dynamique d'un identifiant d'équipement (IMEI) à un module radio (5) de l'UE (1).

7. Procédé selon l'une quelconque des revendications 1 à 6, comportant, en outre, une étape (86) d'attribution dynamique d'une adresse IP virtuelle pour l'UE (1) en tant que source d'une communication.

8. Procédé selon l'une quelconque des revendications 1 à 7, comportant, en outre, une étape (88) d'attribution dynamique d'une adresse IP virtuelle pour chaque destinataire avec lequel l'UE (1) a le droit de communiquer.

9. Système pour la mise en œuvre du procédé d'attribution dynamique d'identifiants (80) selon l'une quelconque des revendications précédentes, comportant :
- un équipement utilisateur - UE (1), l'UE (1) utilisant une interface radio (11) d'un premier réseau de téléphonie mobile (10) pour se connecter ;
- une carte de circuit intégré universelle embarquée ou carte - eUICC (4) résidant dans l'UE (1) ; et,
- un équipement de gestion d'identifiants (64) relié à une interface externe d'itinérance (70) du premier réseau de téléphonie mobile (10), l'équipement de gestion d'identifiants (64) étant propre à : attribuer à l'eUICC (4) un identifiant d'abonnement sélectionné dans une réserve d'identifiants d'abonnement mémorisée par l'équipement de gestion d'identifiants (64) ; à transmettre à l'eUICC (4) l'identifiant d'abonnement attribué dans un champ d'un message échangé conformément à un protocole standard d'attachement d'un terminal itinérant sur le premier réseau de téléphonie mobile (10) ; à créer un profil d'abonné spécifique de l'eUICC (1) ; et à mettre à jour un service d'abonnés avec ledit profil d'abonné, ledit profil d'abonné intégrant l'identifiant d'abonnement attribué à l'eUICC.

10. Système selon la revendication 9, dans lequel l'équipement de gestion d'identifiants (64) est associé à un serveur d'abonnés - HSS (18) assurant ledit service d'abonnés.

## Patentansprüche

1. Verfahren zum dynamischen Zuweisen von Kennungen (80), wobei das Verfahren darin besteht, einer eingebetteten universellen integrierten Schaltkreiskarte, eUICC, (4), die in einer Benutzerausrüstung, UE, (1) residiert, mindestens eine Teilnehmerkennung (IMSI) zuweisen, wobei das Verfahren darin besteht, durch eine Kennungsverwaltungsausrüstung (64) über ein erstes Mobilfunknetz (10), dessen Funkschnittstelle (11) von der UE (1) verwendet wird, um eine Authentifizierungsanfrage zu stellen, die nicht zu einer Netzanbindung führen wird, eine Teilnehmerkennung (IMSI) in einem Feld einer Nachricht zu übertragen, die gemäß einem standardmäßigen Anbindungsprotokoll eines Roaming-Endgeräts an das erste Mobilfunknetz (10) ausgetauscht wird, die Kennungsverwaltungsausrüstung (64) mit einer externen Roaming-Schnittstelle (70) des ersten Mobilfunknetzes (10) verbunden ist, die übertragene Teilnehmerkennung (IMSI) von der Kennungsverwaltungsausrüstung (64) aus einem im Vorfeld definierten Pool von Teilnehmerkennungen ausgewählt worden ist, wobei das Verfahren ferner darin besteht, mittels der Kennungsverwaltungsausrüstung (64) ein spezifisches Teilnehmerprofil für die eUICC (4) zu erstellen und einen Teilnehmerdienst mit dem Teilnehmerprofil zu aktualisieren, wobei das Teilnehmerprofil die Teilnehmerkennung integriert, die der eUICC zugewiesen ist.

2. Verfahren nach Anspruch 1, das darin besteht, an die eUICC (4) eine temporäre Teilnehmerkennung zu übertragen und ein temporäres Teilnehmerprofil zu erstellen, das es der UE (1) ermöglicht, sich an das erste Mobilfunknetz (10) anzubinden, wobei das Verfahren ferner darin besteht, ein starkes Authentifizierungsverfahren zwischen der eUICC (4) und der Kennungsverwaltungsausrüstung (64) zu implementieren.

3. Verfahren nach Anspruch 2, das darin besteht, nach Authentifizierung des eUICC (4) eine gesicherte Verbindung herzustellen, die einen Austausch diversifizierter Schlüssel von der eUICC zu der Kennungsverwaltungsausrüstung (64) ermöglicht, und dann an die eUICC eine endgültige Teilnehmerkennung zu übertragen und ein endgültiges Teilnehmerprofil zu erstellen, wobei diese Übertragungs- und/oder Erstellungsschritte die ausgetauschten diversifizierten Schlüssel verwenden.

4. Verfahren nach einem der Ansprüche 1 bis 3, wobei die eUICC (4) und die Kennungsverwaltungsausrüstung (64) Verschlüsselungsparameter austauschen, die es ermöglichen, auf beiden Seiten Anmeldeinformationen zu berechnen, wobei das Teilnehmerprofil die Anmeldeinformationen integriert.

5. Verfahren nach einem der Ansprüche 1 bis 4, wobei die Kennungsverwaltungsausrüstung (64) anhand einer Kennung der eUICC, die von der eUICC empfangen wird und in einer Liste von eUICC-Kennungen vorhanden ist, die von der Kennungsverwaltungsausrüstung (64) gespeichert wird, eine eUICC (4) erkennt, an die eine Kennung bereitgestellt werden soll.

6. Verfahren nach einem der Ansprüche 1 bis 5, ferner umfassend einen Schritt (82) eines dynamischen Zuweisens einer Ausrüstungskennung (IMEI) an ein Funkmodul (5) der UE (1).

7. Verfahren nach einem der Ansprüche 1 bis 6, ferner umfassend einen Schritt (86) eines dynamischen Zuweisens einer virtuellen IP-Adresse für die UE (1) als Quelle für eine Kommunikation.

8. Verfahren nach einem der Ansprüche 1 bis 7, ferner umfassend einen Schritt (88) eines dynamischen Zuweisens einer virtuellen IP-Adresse für jeden Empfänger, mit dem die UE (1) das Recht hat zu kommunizieren.

9. System zur Durchführung des Verfahrens zum dynamischen Zuweisen von Kennungen (80) nach einem der vorherigen Ansprüche, umfassend:
- eine Benutzerausrüstung, UE, (1), wobei die UE (1) eine Funkschnittstelle (11) eines ersten Mobilfunknetzes (10) verwendet, um sich zu verbinden;
- eine eingebettete universelle integrierte Schaltkreiskarte oder Karte, eUICC, (4), die in der UE (1) residiert; und,
- eine Kennungsverwaltungsausrüstung (64), die mit einer externen Roaming-Schnittstelle (70) des ersten Mobilfunknetzes (10) verbunden ist, wobei die Kennungsverwaltungsausrüstung (64) zu Folgendem geeignet ist: Zuweisen, an die eUICC (4), einer Teilnehmerkennung, die ausgewählt ist aus einem Pool von Teilnehmerkennungen, der von der Kennungsverwaltungsausrüstung (64) gespeichert wird; Übertragen, an die eUICC (4), der zugewiesenen Teilnehmerkennung in einem Feld einer Nachricht, die gemäß einem standardmäßigen Anbindungsprotokoll eines Roaming-Endgeräts an das erste Mobilfunknetz (10) ausgetauscht wird; Erstellen eines spezifischen Teilnehmerprofil der eUICC (1); und Aktualisieren eines Teilnehmerdiensts mit dem Teilnehmerprofil, wobei das Teilnehmerprofil Teilnehmerkennung integriert, die der eUICC zugewiesen ist.

10. System nach Anspruch 9, wobei die Kennungsverwaltungsausrüstung (64) mit einem Teilnehmerserver, HSS, (18) assoziiert ist, der den Teilnehmerdienst gewährleistet.

## Claims

1. A method for dynamic allocation of identifiers (80), the method consisting in allocating at least one subscription identifier (IMSI) to an embedded universal integrated circuit card - eUICC (4) residing in an item of user equipment - UE (1), the method consisting in transmitting, by an item of identifier management equipment (64), through a first mobile telephone network (10) of which a radio interface (11) is used by the UE (1) to make an authentication request which will not lead to an attachment to the network, a subscription identifier (IMSI) in a field of a message exchanged in accordance with a standard attachment protocol of a roaming terminal on the first mobile telephone network (10), the identifier management equipment (64) being connected to an external roaming interface (70) of the first mobile telephone network (10), the transmitted subscription identifier (IMSI) having been selected by the identifier management equipment (64) from a pool of previously defined subscription identifiers, the method further consisting in creating, by means of the identifier management equipment (64), a specific subscriber profile for the eUICC (4) and updating a subscriber service with said subscriber profile, said subscriber profile incorporating the subscription identifier allocated to the eUICC.

2. The method according to claim 1, consisting in transmitting to the eUICC (4) a temporary subscription identifier and creating a temporary subscriber profile, allowing the UE (1) to attach itself to the first mobile telephone network (10), the method further consisting in implementing a strong authentication procedure between the eUICC (4) and the identifier management equipment (64).

3. The method according to claim 2, consisting, once the eUICC (4) has been authenticated, in establishing a secure link allowing an exchange of diversified keys from the eUICC to the identifier management equipment (64), then in transmitting to the eUICC a definitive subscription identifier and creating a definitive subscriber profile, these transmission and/or creation steps using the diversified keys exchanged.

4. The method according to any one of claims 1 to 3, wherein the eUICC (4) and the identifier management equipment (64) exchange encryption parameters making it possible to calculate credentials on both sides, said subscriber profile incorporating said credentials.

5. The method according to any one of claims 1 to 4, wherein the identifier management equipment (64) recognizes an eUICC (4) to which to provide an identifier from an identifier of the eUICC received from the eUICC and present in a list of eUICC identifiers stored by the identifier management equipment (64).

6. The method according to any one of claims 1 to 5, further comprising a step (82) for dynamic allocation of an equipment identifier (IMEI) to a radio module (5) of the UE (1).

7. The method according to any one of claims 1 to 6, further comprising a step (86) for dynamic allocation of a virtual IP address for the UE (1) as the source of a communication.

8. The method according to any one of claims 1 to 7, further comprising a step (88) for dynamic allocation of a virtual IP address for each recipient with which the UE (1) has the right to communicate.

9. A system for implementing the method for dynamic allocation of identifiers (80) according to any one of the preceding claims, comprising:
- an item of user equipment - UE (1), the UE (1) using a radio interface (11) of a first mobile telephone network (10) to connect;
- an embedded universal integrated circuit card or card - eUICC (4) residing in the UE (1); and
- an item of identifier management equipment (64) connected to an external roaming interface (70) of the first mobile telephone network (10), the identifier management equipment (64) being able to: allocate to the eUICC (4) a subscription identifier selected from a pool of subscription identifiers stored by the identifier management equipment (64); transmit the allocated subscription identifier to the eUICC (4) in a field of a message exchanged in accordance with a standard attachment protocol of a roaming terminal on the first mobile telephone network (10); create subscriber profile (1) specific to the eUICC (1); and update a subscriber service with said subscriber profile, said subscriber profile incorporating the subscription identifier allocated to the eUICC.

10. The system according to claim 9, wherein the identifier management equipment (64) is associated with a subscriber server - HSS (18) providing said subscriber service.
